# EUROPEAN PATENT APPLICATION

(11) **EP 4 080 471 A1**
(43) Date of publication of application: **26.10.2022**
(21) Application number: 20915781.7
(22) Date of filing: 22.01.2020
(51) Int. Cl.: G07B 15/06

(54) **CHARGING METHOD AND COMMUNICATION APPARATUS**

(71) Applicant: Huawei Technologies Co., Ltd., Shenzhen, Guangdong 518129 (CN)
(72) Inventor: SUN, Jizhong, Shenzhen, Guangdong 518129 (CN); CHEN, Liang, Shenzhen, Guangdong 518129 (CN); CHEN, Yanan, Shenzhen, Guangdong 518129 (CN)
(74) Representative: Isarpatent
(86) International application number: PCT/CN2020/073880
(87) International publication number: WO 2021/147017

(57) **Abstract**

Embodiments of this application disclose a charging method and a communication apparatus, and relate to the communication field, to implement simultaneous charging on a plurality of vehicles based on an existing network architecture. This reduces costs and improves automatic toll collection efficiency. The method includes: broadcasting, by a roadside unit RSU, a first message through a PC5 interface, where the first message includes at least one charging service identifier, and the at least one charging service identifier is used to indicate at least one charging service; receiving, by the RSU, a second message sent by a terminal device, where the second message includes charging information of a vehicle associated with the terminal device, the charging information is used for a first charging service of the vehicle, and the first charging service belongs to the at least one charging service; and sending, by the RSU, a third message to a charging server based on the second message, where the third message is used to request the charging server to process the first charging service of the vehicle.

## Description

### TECHNICAL FIELD

Embodiments of this application relate to the communication field, and in particular, to a charging method and a communication apparatus.

### BACKGROUND

In recent years, a near-field communication payment technology has been developed. For example, when a vehicle passes through a station such as a parking lot, a high-speed free-flow toll station, a service area, a gas station, or a charging station, the vehicle is used as a financial payment terminal, to exchange information with a roadside unit (roadside unit, RSU) by using a short range communication (dedicated short range communication, DSRC) technology, to implement automatic payment.

Specifically, an ETC lane may be built, and an electronic toll collection (electronic toll collection, ETC) terminal device is mounted on the vehicle. When the vehicle on which the ETC terminal device is mounted passes through the ETC lane, the ETC terminal device sends vehicle information to the RSU. After receiving the vehicle information, the RSU processes data, automatically identifies the vehicle, calculates a toll, and deducts the toll. Moreover, the RSU may further send a signal to a mechanical apparatus to indicate the mechanical apparatus to lift a pole and release the vehicle.

In an existing solution, ETC lane-level unicast communication is used, and a plurality of terminal devices are not supported to communicate with the RSU at the same time. Consequently, a plurality of vehicles cannot be charged at the same time, and efficiency is relatively low. In addition, ETC lanes require high construction and maintenance costs, and therefore cannot be widely applied to various scenarios.

### SUMMARY

Embodiments of this application provide a charging method and a communication apparatus, to implement simultaneous charging on a plurality of vehicles based on an existing network architecture. This reduces costs and improves automatic toll collection efficiency.

According to a first aspect, a charging method is provided. The method includes: A roadside unit RSU broadcasts a first message through a PC5 interface. The first message includes at least one charging service identifier. The at least one charging service identifier is used to indicate at least one charging service. The RSU receives a second message sent by a terminal device. The second message includes charging information of a vehicle associated with the terminal device. The charging information is used for a first charging service of the vehicle. The first charging service belongs to the at least one charging service. The RSU sends a third message to a charging server based on the second message. The third message is used to request the charging server to process the first charging service of the vehicle.

The method in this embodiment of this application may implement an automatic charging service based on an RSU in an existing network architecture without spending a large quantity of human and material resources in widely constructing ETC lanes. This reduces implementation costs of automatic charging. Specifically, the RSU may broadcast, through the PC5 interface, the charging service identifier supported by the RSU. Each terminal device within a communication radius of the RSU may send the second message to the RSU based on a service requirement of the terminal device, so that a service of the terminal device is processed by the charging server. Charging services requested by a plurality of terminal devices are processed at the same time, and a plurality of vehicles can be charged at the same time. This greatly improves efficiency of an automatic toll collection service.

With reference to the first aspect, in a first possible implementation of the first aspect, the second message includes a first field and a second field. The method further includes: decrypting the first field based on a private key of the RSU to obtain a symmetric key; and decrypting the second field based on the symmetric key to obtain the charging information.

In the method provided in this embodiment of this application, the charging information may be further encrypted, to effectively prevent the message from being tampered with and protect user privacy.

With reference to the first aspect or the first possible implementation of the first aspect, in a second possible implementation of the first aspect, the charging information of the vehicle associated with the terminal device includes license plate information of the vehicle and location information of the vehicle.

This embodiment of this application provides a possible implementation of the charging information. The charging service of the vehicle may be processed based on the license plate information of the vehicle and the location information of the vehicle.

With reference to the second possible implementation of the first aspect, in a third possible implementation of the first aspect, that the third message is used to request the charging server to process the first charging service of the vehicle includes: the third message includes the license plate information of the vehicle and the location information of the vehicle.

In this embodiment of this application, the RSU reports the license plate information of the vehicle and the location information of the vehicle to the charging server, so that the charging server processes the charging service of the vehicle based on the license plate information of the vehicle and the location information of the vehicle.

With reference to the first aspect or the first possible implementation of the first aspect, in a fourth possible implementation of the first aspect, the charging information of the vehicle associated with the terminal device includes license plate information of the vehicle and a temporary identifier of the terminal device.

In the method provided in this embodiment of this application, to protect user privacy and prevent the vehicle from being tracked, the terminal device may not report the location information of the vehicle, but report the license plate information of the vehicle and the temporary identifier of the terminal device, to process the charging service of the vehicle based on the license plate information and the temporary identifier of the terminal device.

With reference to the fourth possible implementation of the first aspect, in a fifth possible implementation of the first aspect, that the third message is used to request the charging server to process the first charging service of the vehicle includes: the third message includes the license plate information of the vehicle and the temporary identifier of the terminal device.

In this embodiment of this application, the RSU reports the license plate information and the temporary identifier of the terminal device to the charging server, so that the charging server processes the charging service of the vehicle based on the license plate information and the temporary identifier of the terminal device.

With reference to the fourth or the fifth possible implementation of the first aspect, in a sixth possible implementation of the first aspect, the method further includes: receiving a basic safety message BSM from the terminal device, where the BSM includes the location information of the vehicle and the temporary identifier of the terminal device; parsing the BSM to obtain the location information of the vehicle and the temporary identifier of the terminal device; and sending the location information of the vehicle and the temporary identifier of the terminal device to the charging server.

In this embodiment of this application, to determine a location of the vehicle to process the charging service of the vehicle, the RSU may further parse the BSM to obtain the location information of the vehicle and a temporary identifier of the vehicle, and report the location information of the vehicle and the temporary identifier of the vehicle to the charging server, so that the charging server determines the location information of the vehicle based on the third message, the location information of the vehicle, and the temporary identifier of the vehicle reported by the RSU. For example, the third message includes a terminal temporary identifier "A" and license plate information "123". The RSU parses the BSM to obtain location information "C" of the vehicle and a temporary identifier "A" of the vehicle, and reports the location information of the vehicle and the temporary identifier "A" of the vehicle to the charging server. The charging server may associate the location information "C" with the license plate information " 123" based on the temporary identifier "A", and charge, based on the location information "C", the vehicle associated with the license plate information "123".

With reference to the first aspect or the first possible implementation of the first aspect, in a seventh possible implementation of the first aspect, the charging information of the vehicle associated with the terminal device includes license plate information of the vehicle.

To protect user privacy and prevent the vehicle from being tracked, the terminal device may not report location information of the vehicle, but report the license plate information of the vehicle, to process the charging service of the vehicle based on the license plate information.

With reference to the seventh possible implementation of the first aspect, in an eighth possible implementation of the first aspect, the method further includes: parsing the second message to determine a source layer-2 identifier of the second message, where the third message includes the license plate information of the vehicle and the source layer-2 identifier of the second message.

In this embodiment of this application, the RSU may further determine the source layer-2 identifier of the second message based on the second message sent by the terminal device; and report the source layer-2 identifier of the second message to the charging server, so that the charging server determines the location information of the vehicle based on the source layer-2 identifier of the second message.

With reference to the eighth possible implementation of the first aspect, in a ninth possible implementation of the eighth aspect, the method further includes:
receiving a basic safety message BSM from the terminal device, where the BSM includes the location information of the vehicle;
parsing the BSM to obtain the location information of the vehicle and a source layer-2 identifier of the BSM; and
sending the location information of the vehicle and the source layer-2 identifier of the BSM to the charging server, where the source layer-2 identifier of the second message is the same as the source layer-2 identifier of the BSM.

In this embodiment of this application, to determine the location of the vehicle to process the charging service of the vehicle, the RSU may further parse the BSM to obtain the location information of the vehicle and the source layer-2 identifier of the BSM, and report the location information of the vehicle and the source layer-2 identifier of the BSM to the charging server, so that the charging server determines the location information of the vehicle based on the second message, the location information of the vehicle, and the temporary identifier of the vehicle reported by the RSU.

In this embodiment of this application, to determine the location of the vehicle to process the charging service of the vehicle, the RSU may further parse the BSM to obtain the location information of the vehicle and the source layer-2 identifier of the BSM, and report the location information of the vehicle and the source layer-2 identifier of the BSM to the charging server, so that the charging server determines the location information of the vehicle based on the third message, the location information of the vehicle, and the source layer-2 identifier of the BSM (which is the same as the source layer-2 identifier of the second message) reported by the RSU. For example, the third message includes a source layer-2 identifier "E" and license plate information "123". The RSU parses the BSM to obtain location information "C" of the vehicle and the source layer-2 identifier "E", and reports the location information of the vehicle and the source layer-2 identifier "E" to the charging server. The charging server may associate the location information "C" with the license plate information "123" based on the source layer-2 identifier "E", and charge, based on the location information "C", the vehicle associated with the license plate information "123".

With reference to any one of the first aspect or the first to the ninth possible implementations of the first aspect, in a tenth possible implementation of the eighth aspect, the first message further includes at least one of the following information: a time at which the RSU sends the first message, an identifier of the RSU, location information of the RSU, a service communication radius of the RSU, station description, and a message type identifier. The station description is used to indicate a traveling direction for charging at a charging point associated with the RSU and/or a number of the charging point. The message type identifier is used to describe a sending type of the first message.

This embodiment of this application further provides other information that may be included in the first message.

With reference to any one of the first aspect or the first to the tenth possible implementations of the first aspect, in an eleventh possible implementation of the eighth aspect, the charging information further includes at least one of the following information: a time at which the terminal device sends the second message, the identifier of the RSU, the symmetric key, a type of the vehicle, a heading angle of the vehicle, and an international mobile equipment identity IMEI of the terminal device.

This embodiment of this application further provides other information that may be included in the first message.

With reference to any one of the first aspect or the first to the eleventh possible implementations of the first aspect, in a twelfth possible implementation of the eighth aspect, the method further includes:
sending a fourth message to the terminal device in response to the second message, where the fourth message is used to indicate a processing result of the first charging service.

In this embodiment of this application, the RSU may further send the fourth message to the terminal device to indicate the processing result of the charging service of the vehicle, so that a user may learn a charging case, for example, a charged amount, a charging location, and a charging time, to improve user experience.

According to a second aspect, a communication apparatus is provided, including: a communication unit, configured to broadcast a first message through a PC5 interface, where the first message includes at least one charging service identifier, and the at least one charging service identifier is used to indicate at least one charging service; the communication unit is further configured to receive a second message sent by a terminal device, where the second message includes charging information of a vehicle associated with the terminal device, the charging information is used for a first charging service of the vehicle, and the first charging service belongs to the at least one charging service; and a processing unit, configured to send a third message to a charging server based on the second message; where the third message is used to request the charging server to process the first charging service of the vehicle.

In this embodiment of this application, an automatic charging service may be implemented based on an RSU in an existing network architecture without spending a large quantity of human and material resources in widely constructing ETC lanes. This reduces implementation costs of automatic charging. Specifically, the RSU may broadcast, through the PC5 interface, the charging service identifier supported by the RSU. Each terminal device within a communication radius of the RSU may send the second message to the RSU based on a service requirement of the terminal device, so that a service of the terminal device is processed by the charging server. Charging services requested by a plurality of terminal devices are processed at the same time, and a plurality of vehicles can be charged at the same time. This greatly improves efficiency of an automatic toll collection service.

With reference to the second aspect, in a first possible implementation of the second aspect, the second message includes a first field and a second field. The processing unit is further configured to: decrypt the first field based on a private key of the RSU to obtain a symmetric key; and decrypt the second field based on the symmetric key to obtain the charging information.

With reference to the second aspect or the first possible implementation of the second aspect, in a second possible implementation of the second aspect, the charging information of the vehicle associated with the terminal device includes license plate information of the vehicle and location information of the vehicle.

With reference to the second possible implementation of the second aspect, in a third possible implementation of the second aspect, that the third message is used to request the charging server to process the first charging service of the vehicle includes: the third message includes the license plate information of the vehicle and the location information of the vehicle.

With reference to the second aspect or the first possible implementation of the second aspect, in a fourth possible implementation of the second aspect, the charging information of the vehicle associated with the terminal device includes license plate information of the vehicle and a temporary identifier of the terminal device.

With reference to the fourth possible implementation of the second aspect, in a fifth possible implementation of the second aspect, that the third message is used to request the charging server to process the first charging service of the vehicle includes: the third message includes the license plate information of the vehicle and the temporary identifier of the terminal device.

With reference to the fourth or the fifth possible implementation of the second aspect, in a sixth possible implementation of the second aspect, the communication unit is further configured to receive a basic safety message BSM from the terminal device. The BSM includes location information of the vehicle and the temporary identifier of the terminal device. The processing unit is further configured to parse the BSM to obtain the location information of the vehicle and the temporary identifier of the terminal device. The communication unit is further configured to send the location information of the vehicle and the temporary identifier of the terminal device to the charging server.

With reference to the second aspect or the first possible implementation of the second aspect, in a seventh possible implementation of the second aspect, the charging information of the vehicle associated with the terminal device includes license plate information of the vehicle.

With reference to the seventh possible implementation of the second aspect, in an eighth possible implementation of the second aspect, the processing unit is further configured to: parse the second message to determine a source layer-2 identifier of the second message. The third message includes the license plate information of the vehicle and the source layer-2 identifier of the second message.

With reference to the eighth possible implementation of the second aspect, in a ninth possible implementation of the second aspect, the communication unit is further configured to receive a basic safety message BSM from the terminal device. The BSM includes location information of the vehicle. The processing unit is further configured to parse the BSM to obtain location information of the vehicle and a source layer-2 identifier of the BSM. The communication unit is further configured to send the location information of the vehicle and the source layer-2 identifier of the BSM to the charging server. The source layer-2 identifier of the second message is the same as the source layer-2 identifier of the BSM.

With reference to any one of the second aspect or the first to the ninth possible implementations of the second aspect, in a tenth possible implementation of the second aspect, the first message further includes at least one of the following information: a time at which the RSU sends the first message, an identifier of the RSU, location information of the RSU, a service communication radius of the RSU, station description, and a message type identifier. The station description is used to indicate a traveling direction for charging at a charging point associated with the RSU and/or a number of the charging point. The message type identifier is used to describe a sending type of the first message.

With reference to any one of the second aspect or the first to the tenth possible implementations of the second aspect, in an eleventh possible implementation of the second aspect, the charging information further includes at least one of the following information:
a time at which the terminal device sends the second message, the identifier of the RSU, the symmetric key, a type of the vehicle, a heading angle of the vehicle, and an international mobile equipment identity IMEI of the terminal device.

With reference to any one of the second aspect or the first to eleventh possible implementations of the second aspect, in a twelfth possible implementation of the second aspect, the communication unit is further configured to send a fourth message to the terminal device in response to the second message. The fourth message is used to indicate a processing result of the first charging service.

According to a third aspect, a computer-readable storage medium is provided. The computer-readable storage medium stores instructions. When the computer-readable storage medium is run on the communication apparatus according to any one of the second aspect or the implementations of the second aspect, the communication apparatus is enabled to perform the communication method according to any one of the first aspect or the implementations of the first aspect.

According to a fourth aspect, a communication apparatus is provided, including at least one processor and a communication interface. The processor is configured to perform the method according to any one of the first aspect or the implementations of the first aspect. The communication interface is used for communication between the communication apparatus and another device.

Optionally, the communication apparatus may further include a memory. The at least one processor may be coupled to the memory. The memory is configured to store a computer program.

The at least one processor is configured to execute the computer program stored in the memory, so that the apparatus performs the method according to any one of the first aspect or the implementations of the first aspect.

According to a fifth aspect, a wireless communication apparatus is provided. The communication apparatus includes a processor, for example, used in the communication apparatus, to implement the method according to any one of the first aspect or the implementations of the first aspect. The communication apparatus may be, for example, a chip system. In a feasible implementation, the chip system further includes a memory. The memory is configured to store program instructions and data that are necessary for implementing the function in the method in the first aspect.

The chip system in the foregoing aspects may be a system-on-a-chip (system-on-a-chip, SOC), a baseband chip, or the like. The baseband chip may include a processor, a channel encoder, a digital signal processor, a modem, an interface module, and the like.

### BRIEF DESCRIPTION OF DRAWINGS

FIG. 1 is a diagram of an architecture of a communication system according to an embodiment of this application;
FIG. 2 is another diagram of an architecture of a communication system according to an embodiment of this application;
FIG. 3 is a schematic diagram of a protocol stack according to an embodiment of this application;
FIG. 4 is a block diagram of a structure of a communication apparatus according to an embodiment of this application;
FIG. 5 is a schematic flowchart of a charging method according to an embodiment of this application;
FIG. 6 is a schematic diagram of location points of an expressway toll road section according to an embodiment of this application;
FIG. 7 is another schematic flowchart of a charging method according to an embodiment of this application;
FIG. 8A and FIG. 8B are another schematic flowchart of a charging method according to an embodiment of this application; and
FIG. 9 to FIG. 12 each are another block diagram of a structure of a communication apparatus according to an embodiment of this application.

### DESCRIPTION OF EMBODIMENTS

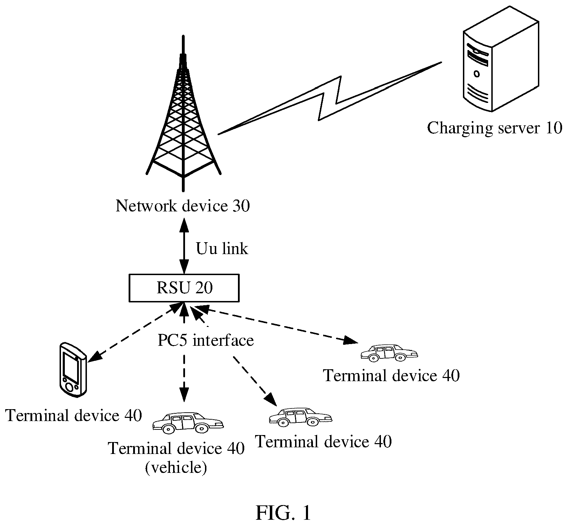

A method provided in embodiments of this application may be applied to a communication system shown in FIG. 1. Refer to FIG. 1. The communication system may include a charging server 10, a roadside unit (roadside unit, RSU) 20, a plurality of network devices 30 (however, FIG. 1 shows only one network device), and a plurality of terminal devices 40. FIG. 1 is merely a schematic diagram, and does not constitute any limitation on a scenario to which the technical solutions provided in this application are applicable. The communication system supports sidelink communication, for example, device to device (device to device, D2D) communication and vehicle to everything (vehicle to everything, V2X) communication.

The network device and the terminal device may perform uplink and downlink transmission through a cellular link (Uu link). The terminal devices may communicate with each other through a sidelink (sidelink), where the communication is, for example, the D2D communication, the V2X communication, or machine type communication (machine type communication, MTC).

The network device may be a transmission reception point (transmission reception point, TRP), a base station, a relay station, an access point, or the like. The network device may be a network device in a 5G communication system or a network device in a future evolved network, or may be a wearable device, a vehicle-mounted device, or the like. In addition, the network device may alternatively be a base transceiver station (base transceiver station, BTS) in a global system for mobile communication (global system for mobile communication, GSM) or a code division multiple access (code division multiple access, CDMA) network, an NB (NodeB) in a wideband code division multiple access (wideband code division multiple access, WCDMA) network, or an eNB or eNodeB (evolutional NodeB) in a long term evolution (long term evolution, LTE) network. The network device may alternatively be a radio controller in a cloud radio access network (cloud radio access network, CRAN) scenario. The base station is used as an example for description in embodiments of this application.

The terminal device may be user equipment (user equipment, UE), an access terminal device, a UE unit, a UE station, a mobile station, a mobile console, a remote station, a remote terminal device, a mobile device, a UE terminal device, a wireless communication device, a UE agent, a UE apparatus, or the like. The access terminal device may be a cellular phone, a cordless phone, a Session Initiation Protocol (session initiation protocol, SIP) phone, a wireless local loop (wireless local loop, WLL) station, a personal digital assistant (personal digital assistant, PDA), a handheld device or a computing device having a wireless communication function, another processing device, vehicle-mounted device, or wearable device connected to a wireless modem, a terminal device in a 5G network, a terminal device in a future evolved public land mobile network (public land mobile network, PLMN) network, or the like. The terminal device in this application may alternatively be a vehicle-mounted module, a vehicle-mounted module assembly, a vehicle-mounted component, a vehicle-mounted chip, or a vehicle-mounted unit that is built in a vehicle as one or more components or units. The vehicle may use the built-in vehicle-mounted module, the vehicle-mounted module assembly, the vehicle-mounted component, the vehicle-mounted chip, or the vehicle-mounted unit to implement the method in this application. Each of the terminal device, and the network device (for example, a roadside unit RSU) in this application may be one or more chips, or may be a system-on-a-chip (System on Chip, SOC), or the like. The terminal device in embodiments of this application may alternatively be an on board unit (on board unit, OBU).

The RSU may be a UE-type RSU (UE-type RSU). Refer to FIG. 1. The RSU may communicate with the terminal devices through a PC5 interface.

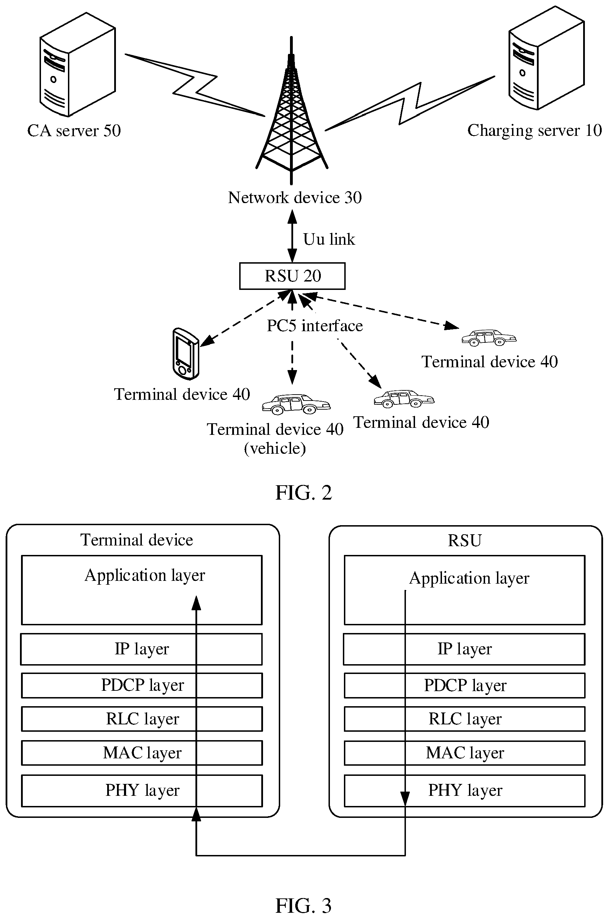

Refer to FIG. 2. The communication system provided in embodiments of this application may further include a certification authority (Certification Authority, CA) server 50. The CA server 50 is configured to perform authentication on the RSU. For example, the CA server 50 may send a service certificate to the RSU. The service certificate is used to perform authentication on the RSU.

In the conventional technology, after a vehicle on which an ETC terminal device is mounted enters an ETC lane, the ETC terminal device sends vehicle information to the RSU based on a DSRC technology. The RSU performs charging based on the vehicle information sent by the ETC terminal device. The charging is performed successively based on a sequence in which the vehicles enter the ETC lane. A plurality of vehicles cannot be charged at the same time, and charging efficiency is low.

In the method provided in embodiments of this application, the RSU may broadcast a first message through a PC5 interface. The first message includes at least one charging service identifier, and the at least one charging service identifier is used to indicate the at least one charging service. The terminal device receives the first message, and sends a second message to the RSU in response to the first message. The second message includes information about a vehicle associated with the terminal device and an identifier of a first charging service triggered by the vehicle. The RSU may further send a request to a charging server based on the vehicle information and the service identifier that are reported by the terminal device, to request the charging server to process the first charging service of the vehicle. It can be learned that the method in embodiments of this application may implement an automatic charging service based on an RSU in an existing network architecture without spending a large quantity of human and material resources in widely constructing ETC lanes. This reduces implementation costs of automatic charging. Specifically, the RSU may broadcast, through the PC5 interface, the charging service identifier supported by the RSU. Each terminal device within a communication radius of the RSU may send the second message to the RSU based on a service requirement of the terminal device, so that a service of the terminal device is processed by the charging server. Charging services requested by a plurality of terminal devices are processed at the same time, and a plurality of vehicles can be charged at the same time. This greatly improves efficiency of an automatic toll collection service.

First, terms used in embodiments of this application are explained and described.

### (1) Broadcast:

Broadcast is a one-to-many communication mode. For example, a transmit end does not need to separately transmit data to each receive end in a one-to-one manner, but transmits the data by using a multicast communication link. All receive ends within a specific range may receive data broadcast by the transmit end. For example, refer to FIG. 1. The RSU may broadcast a signal to the plurality of terminal devices.

### (2) PC5 interface:

The PC5 interface may be a sidelink (sidelink) interface, and may be used for direct communication between terminals in the communication system shown in FIG. 1, or may be used for communication between a terminal and some network devices. For example, a terminal device may communicate with an RSU through the PC5 interface.

The RSU may broadcast a signal through the PC5 interface. A terminal device within a communication radius of the RSU may receive the signal broadcast by the RSU through the PC5 interface.

### (3) Public key and private key:

Both the public key and private key are used to encrypt a message. A difference is that a public key of a device can be saved by all users, but a private key of the device can be saved only by the device.

For example, a first terminal device encrypts a signal by using a public key of a second terminal device, and then sends an encrypted signal to the second terminal device. The second terminal device may decrypt, by using a private key of the second terminal device, the signal received from the first terminal device.

### (4) Symmetric key

Symmetric key encryption is also referred to as private key encryption or shared key encryption. To be specific, a message sender and receiver need to use a same key to encrypt and decrypt a message.

For example, the first terminal device encrypts a signal by using the symmetric key, and then sends an encrypted signal to the second terminal device. The second terminal device may decrypt, by using the symmetric key, the signal received from the first terminal device.

### (5) Source layer-2 (Source Layer-2, SRC) ID and destination layer-2 (Destination-2, DST) ID

Refer to FIG. 3. Protocol stacks of a terminal device and an RSU include an application layer (application layer), an internet protocol (internet protocol, IP) layer, a packet data convergence protocol (packet data convergence protocol, PDCP) layer, a radio link control (radio link control, RLC) layer, a media access control (media access control, MAC) layer, and a physical layer (PHY layer). Functions of the application layer, the IP layer, the PDCP layer, the RLC layer, the MAC layer, and the PHY layer are the same as those of an IP layer, a PDCP layer, an RLC layer, a MAC layer, and a PHY layer in the conventional technology. Details are not described in embodiments of this application.

The SRC ID may be a source MAC layer L2 address of a message, a source inter-layer primitive, or a message identifier of a source application layer. The DST ID may be a destination MAC layer L2 address, a destination inter-layer primitive, or a message identifier of a destination application layer. A different transmit end may be distinguished via an SRC ID of a message. For example, a different terminal device may be identified based on an SRC ID of a message sent by the terminal device. A different receive end may be distinguished via a DST ID of the message. For example, a different terminal device may be identified based on a DST ID of a message received by the terminal device.

It should be noted that an inter-layer primitive is attribute information transmitted between an access layer, a network layer, and the application layer.

### (6) International mobile equipment identity (international mobile equipment identity, IMEI) and UE ID

The IMEI is an identifier of a terminal device, and is used to uniquely identify one terminal device in a global system for mobile communication (global system for mobile communication, GSM). An IMEI of one terminal device is also unique and fixed.

Different from the IMEI, the UE ID is a temporary identifier allocated to the terminal device at the application layer, and may be used to distinguish between different terminal devices. The UE ID of the terminal device is variable. One terminal device may have a plurality of UE IDs. In embodiments of this application, the temporary identifier of the terminal device is the UE ID. The UE ID may further be referred to as a temporary identifier of a vehicle or a temporary identifier of an OBU.

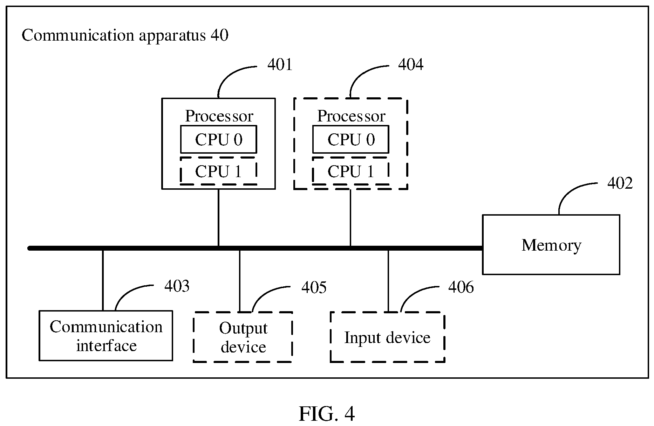

FIG. 4 is a block diagram of a structure of a communication apparatus according to an embodiment of this application. The communication apparatus shown in FIG. 4 may be the terminal device described in embodiments of this application, or may be the RSU described in embodiments of this application. FIG. 4 is a schematic diagram of a hardware structure of a communication apparatus 40 according to an embodiment of this application. The communication apparatus 40 includes a processor 401, a memory 402, and at least one communication interface (in FIG. 4, an example in which a communication interface 403 is included is merely used for description). The processor 401, the memory 402, and the communication interface 403 are connected to each other.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication interface 403 is applicable to any apparatus such as a transceiver, and is configured to communicate with another device or a communication network such as Ethernet, a radio access network (radio access network, RAN), or a wireless local area network (wireless local area network, WLAN).

The memory 402 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the communication line. Alternatively, the memory may be integrated with the processor.

The memory 402 is configured to store computer-executable instructions for performing the solutions in this application, and the processor 401 controls execution of the computer-executable instructions. The processor 401 is configured to execute the computer-executable instructions stored in the memory 402, to implement the intent processing method provided in the following embodiments of this application.

Optionally, the computer-executable instructions in embodiments of this application may also be referred to as application program code. This is not specifically limited in embodiments of this application.

During specific implementation, in an embodiment, the processor 401 may include one or more CPUs, for example, a CPU 0 and a CPU 1 in FIG. 4.

During specific implementation, in an embodiment, the communication apparatus 40 may include a plurality of processors, for example, the processor 401 and a processor 404 in FIG. 4. Each of the processors may be a single-core (single-CPU) processor, or may be a multi-core (multi-CPU) processor. The processor herein may refer to one or more devices, circuits, and/or processing cores configured to process data (for example, computer program instructions).

During specific implementation, in an embodiment, when the communication apparatus 40 is a terminal device, the communication apparatus 40 may further include an output device 405 and an input device 406. The output device 405 communicates with the processor 401 (or the processor 404), and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401 (or the processor 404), and may receive an input of a user in a plurality of manners. For example, the input device 406 may be a mouse, a keyboard, a touchscreen device, a sensor device, or the like.

The communication apparatus 40 may be a general-purpose device or a special-purpose device. During specific implementation, the communication apparatus 40 may be a desktop computer, a portable computer, a network server, a personal digital assistant (personal digital assistant, PDA), a mobile phone, a tablet computer, a wireless terminal device, an embedded device, or a device having a structure similar to that in FIG. 4. A type of the communication apparatus 40 is not limited in embodiments of this application.

It should be noted that the communication apparatus 40 may be an entire terminal, may be a part or component that implements a function of the terminal, or may be a communication chip, for example, a baseband chip. When the communication apparatus 40 is an entire terminal, the communication interface may be a radio frequency module. When the communication apparatus 40 is a communication chip, the communication interface 403 may be an input/output interface circuit of the chip, where the input/output interface circuit is configured to read and output a baseband signal.

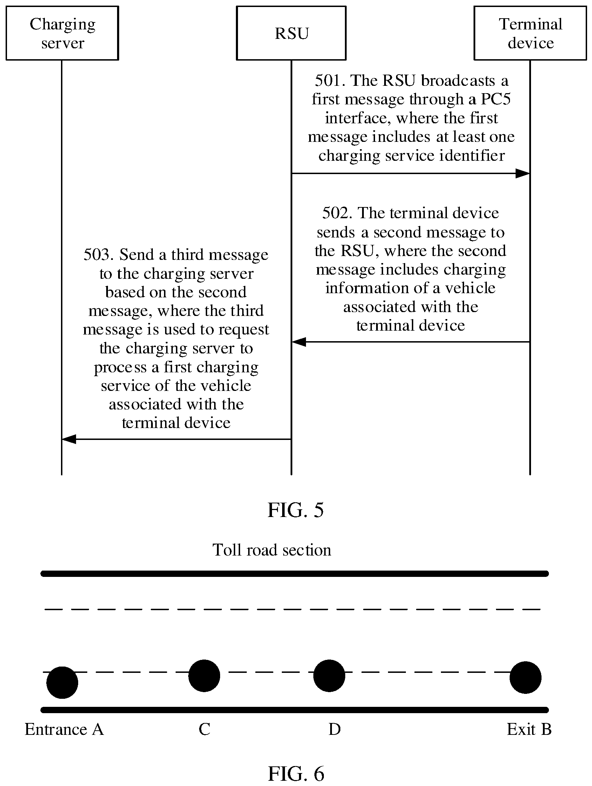

An embodiment of this application provides a charging method. The method is applied to the communication system shown in FIG. 1 or FIG. 2. As shown in FIG. 5, the method includes the following steps.

501. An RSU broadcasts a first message through a PC5 interface, where the first message includes at least one charging service identifier.

During specific implementation, the first message is used to indicate service information of the RSU. The at least one charging service identifier in the first message is an identifier of a charging service supported by the RSU. The RSU may process, based on information sent by a terminal device, a charging service requested by the terminal device. The first message may be a message broadcast by the RSU. For example, the first message is a road side information (roadside information, RSI) message. In a possible implementation, an AlertType field, a SignType field, or an EventSource field of the RSI message includes a field indicating the charging service identifier. For example, in the AlertType field, "000" is used to indicate an expressway charging service, "010" is used to indicate a parking lot charging service, and "100" is used to indicate a gas station charging service.

In a possible implementation, the RSU may periodically broadcast the first message through a PC5 interface, to indicate the service information of the RSU.

Optionally, the first message may further include location information of the RSU, a communication radius of the RSU, a timestamp, an RSU ID, a message type identifier, station description (description), and the like.

The location information of the RSU is used to describe a location of the RSU, for example, a geographical location of the RSU. During specific implementation, the geographical location of the RSU may be described by using longitude and latitude.

The communication radius of the RSU is used to describe a communication range of the RSU. A terminal device within the communication radius of the RSU may communicate with the RSU.

The timestamp is used to describe a current time point, for example, a moment at which the RSU broadcasts the first message.

The message type identifier is used to describe a sending type of the first message. For example, the first message is a broadcast message, a unicast message, or a multicast message.

The charging service identifier is used to describe a type of the charging service. For example, the type of the charging service may be the expressway charging service, the parking lot charging service, the gas station charging service, or the like.

The station description is used to indicate a traveling direction for charging at a charging point (or a toll station) associated with the RSU, and may further indicate a number of the charging point or a gantry number of the charging point. The charging point associated with the RSU may be a charging point closest to the RSU. A vehicle passing through the charging point may communicate with the RSU, for example, receive a first message broadcast by the RSU. In addition, the traveling direction for charging may be uplink or downlink. When the "traveling direction for charging" in the station description is uplink, a vehicle in the uplink direction of a toll road section is to be charged. When the "traveling direction for charging" in the station description is downlink, a vehicle in the downlink direction of the toll road section is to be charged. It is assumed that the toll road section is an expressway road section between a first location and a second location. The uplink direction may be a direction from the first location to the second location, and the downlink direction is a direction from the second location to the first location. Alternatively, the uplink direction is a direction from the second location to the first location, and the downlink direction is a direction from the first location to the second location.

During specific implementation, the terminal device may determine, by using the station description in the first message broadcast by the RSU, whether the RSU is at a key location or a common location.

The key location may be an entrance of the expressway toll road section, an exit of the expressway toll road section, or another key point on the road section. The common location may be a location other than the entrance and the exit of the expressway toll road section. For example, refer to FIG. 6. The entrance of the expressway toll road section is A, and the exit is B. RSUs deployed at A and B may be considered as the RSUs deployed at the key locations. An RSU deployed at another location on the road section may be considered as the RSU deployed at the common location. For example, RSUs deployed at C and D may be considered as the RSUs deployed at the common locations.

502. The terminal device sends a second message to the RSU. The second message includes charging information of a vehicle associated with the terminal device. The charging information is used for a first charging service of the vehicle.

It should be noted that the at least one charging service identifier in the first message may indicate at least one charging service. The charging service is in a one-to-one correspondence with the charging service identifier. In other words, each charging service has a unique charging service identifier.

For example, the charging service identifiers indicated by the first message are "000", "010", and "100". The vehicle associated with the terminal device is currently on the expressway toll road section. The second message may be sent to the RSU. The second message includes charging information related to an expressway road charging service (for example, the first charging service in embodiments of this application) of the vehicle. The expressway road charging service of the vehicle associated with the terminal device may be processed based on the charging information related to the expressway road charging service sent by the terminal device.

During specific implementation, the terminal device receives the first message broadcast by the RSU, and sends the second message to the RSU in response to the first message, to request to process the charging service of the terminal device, for example, the first charging service described in embodiments of this application. Alternatively, after receiving the first message, the terminal device determines a distance between the RSU and the vehicle associated with the terminal device. When determining that the distance between the vehicle and the RSU is less than or equal to a distance threshold, the terminal device sends the second message to the RSU.

In addition, the terminal device may be a vehicle-mounted device. In embodiments of this application, the "vehicle associated with the terminal device" may be a vehicle on which the vehicle-mounted device is mounted. The terminal device may alternatively be a mobile phone. The "vehicle associated with the terminal device" may be a vehicle registered on a charging APP (an application program) of the mobile phone.

During specific implementation, the terminal device may continuously send the second message to the RSU for N times, where N is an integer greater than 1. The second message includes location information of the vehicle associated with the terminal device and license plate information of the vehicle associated with the terminal device, so that the first charging service of the vehicle is processed based on the location information of the vehicle and the license plate information of the vehicle, for example, a toll is calculated and deducted from a corresponding bank card.

In a possible implementation, to prevent tracking, the terminal device may report the location information of the vehicle at the key location, and does not report the location information of the vehicle at the common location. Therefore, the charging information in the second message reported by the terminal device varies with the location of the RSU. Specifically, there are two different implementations as follows.

In a first implementation, when determining, based on the station description in the first message, that the RSU is at the key location, the terminal device reports the license plate information and the location information of the vehicle to the RSU.

For example, the charging information in the second message sent by the terminal device includes the license plate information of the vehicle associated with the terminal device and the location information of the vehicle associated with the terminal device.

In a second implementation, when determining, based on the station description in the first message, that the RSU is at the common location, the terminal device does not report the location information of the vehicle to the RSU, but may report the license plate information to the RSU.

For example, the charging information in the second message sent by the terminal device includes the license plate information of the vehicle associated with the terminal device.

In addition, when the terminal device does not report the location information of the vehicle to the RSU, a charging server cannot determine a traveling track of the vehicle based on the location information of the vehicle, and therefore cannot process the first charging service of the vehicle. However, the charging server may fit the traveling track of the vehicle based on a temporary identifier or an SRC ID of the terminal device, to process the charging service of the vehicle based on the license plate information in the second message and the fitted moving track.

During specific implementation, the terminal device periodically reports a basic safety message (basic safety message, BSM) to the RSU. The BSM carries the temporary identifier of the terminal device and location information of the terminal device. In embodiments of this application, the location information of the terminal device may represent the location information of the vehicle associated with the terminal device.

In a possible implementation, to improve message security, a field in the second message may be further encrypted. For example, a first field in the second message is used to indicate a symmetric key. The terminal device may encrypt a second field by using a public key of the RSU, and decrypt the first field in the second message by using a private key of the RSU, to obtain the symmetric key. The second field in the second message is used to indicate the charging information. The terminal device may encrypt the second field in the second message by using the symmetric key, and may obtain the charging information of the vehicle associated with the terminal device by decrypting the second field by using the symmetric key.

Optionally, the second message may further include one or more (which may be understood) of the following information: the timestamp, the temporary identifier (UE ID) of the terminal device, a vehicle type, a heading angle of the vehicle, an IMEI of the terminal device, the charging service identifier (for example, a first charging service identifier), and a toll station location information list. The toll station location information list is used to describe location information of a toll station that the terminal device passes through. The location information of the toll station may be number information of the toll station. In a possible implementation, the location information of the toll station may be longitude and latitude of the toll station.

It should be noted that the toll station location information list is obtained by the terminal device by summarizing location information in the station description (the station description in the first message broadcast by the RSU). When the RSU cannot obtain the location information or the traveling track of the terminal device, the RSU may determine the traveling track of the vehicle based on the toll station location information list.

The following Table 1 shows one or more fields that may be included in the second message and a meaning of each field.

**Table 1**

| Field name | Meaning | Encryption Mode | Remarks |
|---|---|---|---|
| MsgCount | Number of a second message | No encryption | The second message is sequentially and cyclically numbered based on a sending sequence of the second message. A first message number is randomly generated in [0, N-1]. Then, the second message is sequentially and cyclically numbered in [0, N-1]. |
| timeStamp MinuteOfTheYear | Timestamp | No encryption | Indicates a time at which the second message is sent |
| RSU ID | Identifier of an RSU | No encryption | Valued as an RSU ID in a first message, where the RSU may identify, based on an RSU ID in the second message, whether to process the second message. The RSU processes the message only when determining that the RSU ID in the received second message is the same as of the RSU ID. |
| UE ID | Temporary identifier of a terminal device or vehicle | No encryption | The UE ID changes dynamically, which prevents the vehicle from being tracked. |
| pos Position3D | Location information | No encryption | Indicates a location of the vehicle associated with the terminal device, where charging may be performed based on the location of the vehicle. |
| encryptKey | Symmetric key | Encrypted by using a public key of the RSU | Allocated by the terminal device, and used to encrypt charging information |
| plateNum | License plate number | Encrypted by using the symmetric key allocated by the terminal device | A Chinese character may be included. Charging may be performed based on the license plate number of the vehicle. |
| vehicleClass | Vehicle type | Encrypted by using the symmetric key allocated by the terminal device | Used to describe a type of the vehicle. Charging varies with the vehicle type, and may be performed based on the type of the vehicle, for example, a passenger vehicle, a truck, or a special operation vehicle. |
| Heading | Heading angle | Encrypted by using the symmetric key allocated by the terminal device | Used for the RSU to distinguish traveling directions of the vehicle associated with the terminal device. Charging may vary with the traveling directions. |
| IMEI | Equipment identity | Encrypted by using the symmetric key allocated by the terminal device | When MAC IDs of different terminal devices are the same, the RSU may distinguish between the different terminal devices based on an IMEI in the second message |
| TollS tationLocationInfoList | Toll station location information list | Encryption | Location information of a toll station that the vehicle passes through, for example, location information of a toll station at an entrance of an expressway road section, location information of a toll station at an exit of the expressway road section, or location information of a key point on the expressway road section. |

503. The RSU receives the second message from the terminal device, and sends a third message to the charging server based on the second message. The third message is used to request the charging server to process the first charging service of the vehicle associated with the terminal device.

Based on the different implementations of the second message, the third message may also have three different implementations as follows.

In a first implementation, the charging information in the second message includes the location information of the vehicle associated with the terminal device and the license plate information of the vehicle associated with the terminal device. The RSU may report the location information of the vehicle and the license plate information of the vehicle to the charging server. For example, the third message includes the location information of the vehicle associated with the terminal device and the license plate information of the vehicle associated with the terminal device.

In a second implementation, the charging information in the second message includes the license plate information of the vehicle associated with the terminal device and the temporary identifier of the terminal device, but does not include the location information of the vehicle associated with the terminal device. The RSU may report the license plate information of the vehicle and the temporary identifier of the terminal device to the charging server. For example, the third message includes the license plate information of the vehicle associated with the terminal device and the temporary identifier of the terminal device, but does not include the location information of the vehicle associated with the terminal device.

In the second implementation, the RSU may further parse the BSM sent by the terminal device, to obtain the location information of the terminal device and the temporary identifier of the terminal device. To enable the charging server to determine the traveling track of the vehicle, after parsing the BSM, the RSU may further report the temporary identifier of the terminal device and the location information of the terminal device to the charging server. Therefore, the charging server determines, based on the temporary identifier, the license plate information in the third message, and the temporary identifier and the location information that are reported by the RSU, a traveling track of the vehicle corresponding to the license plate information, to process the charging service of the vehicle.

For example, the second message includes a temporary identifier "A" of the terminal device and a license plate number "Shaan A7241" associated with the terminal device. The third message sent by the RSU to the charging server includes the temporary identifier "A" of the terminal device and the license plate number "Shaan A7241" associated with the terminal device.

The RSU may further parse the BSM sent by the terminal device, to obtain location information "B" of the terminal device and the temporary identifier "A" of the terminal device. The RSU may further send the location information "B" of the terminal device and the temporary identifier "A" of the terminal device to the charging server. The charging server may determine, based on the third message, the location information "B" reported by the terminal device, and the temporary identifier "A" of the terminal device, that the location information of the vehicle corresponding to the license plate number "Shaan A7241" is "B", to process the charging service of the vehicle.

In a third implementation, the charging information in the second message includes the license plate information of the vehicle associated with the terminal device, but does not include the location information of the vehicle associated with the terminal device. The RSU may parse the second message, to determine a source layer-2 identifier of the second message, and may further report the license plate information of the vehicle and the source layer-2 identifier of the second message to the charging server. For example, the third message includes the license plate information of the vehicle associated with the terminal device and the source layer-2 identifier of the second message, but does not include the location information of the vehicle associated with the terminal device.

In the third implementation, the RSU may further parse a BSM sent by the terminal device, to obtain location information of the terminal device and a source layer-2 identifier of the BSM. To enable the charging server to determine the traveling track of the vehicle, after parsing the BSM, the RSU may further report the source layer-2 identifier of the BSM and the location information of the terminal device to the charging server. It may be considered that the source layer-2 identifier in the second message is the same as the source layer-2 identifier of the BSM.

The charging server determines, based on the source layer-2 identifier, the license plate information in the third message, and the source layer-2 identifier and the location information that are reported by the RSU, the traveling track of the vehicle corresponding to the license plate information, to process the charging service of the vehicle.

For example, the second message includes a license plate number "Shaan A7241" associated with the terminal device. The RSU parses the second message to determine a source layer-2 identifier "X" of the second message. The third message sent to the charging server includes the source layer-2 identifier "X" of the second message and the license plate number "Shaan A7241" associated with the terminal device.

The RSU may further parse the BSM sent by the terminal device, to obtain location information "B" of the terminal device and the source layer-2 identifier "X" of the BSM. The RSU may further send the location information "B" of the terminal device and the source layer-2 identifier "X" to the charging server. The charging server may determine, based on the third message, the location information "B" reported by the terminal device, and the source layer-2 identifier "X", that the location information of the vehicle corresponding to the license plate number "Shaan A7241" is "B", to process the charging service of the vehicle.

Optionally, the third message may further include at least one of the following information: a message number, the timestamp, a vehicle ID, the RSU ID, the location information, a speed, the heading angle of the vehicle, the vehicle type, the license plate information, the IMEI, the charging service identifier (for example, a first charging service identifier), and location information of the toll station.

During specific implementation, the third message is in a fixed data structure format, a JSON data structure format, or the like. The RSU communicates with the charging server according to a user datagram protocol (user datagram protocol, UDP) or a transmission control protocol (transmission control protocol, TCP), for example, sends the third message to the charging server in the UDP or TCP manner.

Table 2 shows one or more fields that may be included in the third message. A row in Table 2 represents four bytes (Bytes) in the third message. One byte includes eight bits. For example, "0", "1", "2", and "3" in Table 2 respectively represent eight bits.

**Table 2**

| 4 Bytes | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|
| 0 | | | | | | | | 1 | | | | | | | | 2 | | | | | | | | 3 | | | | | | | |
| 0 | 1 | 2 | 3 | 4 | 5 | 6 | 7 | 0 | 1 | 2 | 3 | 4 | 5 | 6 | 7 | 0 | 1 | 2 | 3 | 4 | 5 | 6 | 7 | 0 | 1 | 2 | 3 | 4 | 5 | 6 | 7 |
| MsgCount | | | | | | | | MinuteOfTheYear | | | | | | | | | | | | | | | | | | | | | | | |
| MinuteOfTheYear | | | | | | | | id | | | | | | | | | | | | | | | | | | | | | | | |
| id | | | | | | | | | | | | | | | | | | | | | | | | | | | | | | | |
| id | | | | | | | | rsuId | | | | | | | | | | | | | | | | | | | | | | | |
| rsuId | | | | | | | | | | | | | | | | | | | | | | | | | | | | | | | |
| rsuId | Latitude | | | | | | | | | | | | | | | | | | | | | | | | | | | | | | |
| Latitude | Longitude | | | | | | | | | | | | | | | | | | | | | | | | | | | | | | |
| Longitude | Speed | | | | | | | | | | | | | | Heading | | | | | | | | | | | | | | | | |
| Heading | Basic VehicleClass | | | | | | | | | plateNum | | | | | | | | | | | | | | | | | | | | | |
| plateNum | | | | | | | | | | | | | | | | | | | | | | | | | | | | | | | |
| plateNum | | | | | | | | | | | | | | | | | | | | | | | | | | | | | | | |
| plateNum | | | | | | | | | | | | | | | | | | | | | | | | | | | | | | | |
| plateNum | | | | | | | | | | imei | | | | | | | | | | | | | | | | | | | | | |
| imei | | | | | | | | | | | | | | | | | | | | | | | | | | | | | | | |
| imei | | | | | | | | | | | | | | | | | | | | | | | | | | | | | | | |
| imei | | | | | | | | | | | | | | | | | | | | | | | | | | | | | | | |
| imei | | | | | | | | | | TollStationInformationList | | | | | | | | | | | | | | | | | | | | | |
| TollStationInformationList | | | | | | | | | | | | | | | | | | | | | | | | | | | | | | | |
| TollStationInformationList | | | | | | | | | | | | | | | | | | | | | | | | | | | | | | | |
| TollStationInformationList | | | | | | | | | | | | | | | | | | | | | | | | | | | | | | | |
| TollStationInformationList | | | | | | | | | | | | | | | | | | | | | | | | | | | | | | | |
| TollStationInformationList | | | | | | | | | | | | | | | | | | | | | | | | | | | | | | | |
| TollStationInformationList | | | | | | | | | | | | | | | | | | | | | | | | | | | | | | | |
| TollStationInformationList | | | | | | | | | | | | | | | | | | | | | | | | | | | | | | | |
| TollStationInformationList | | | | | | | | | | | | | | | | | | | | | | | | | | | | | | | |
| TollStationInformationList | | | | | | | | | | | | | | | | | | | | | | | | | | | | | | | |
| TollStationInformationList | | | | | | | | | | | | | | | | | | | | | | | | | | | | | | | |

Refer to Table 2. A data type of a MsgCount field is unsigned char. A value range is 0 to 127.

A data type of a MinuteOfTheYear field is unsigned int. The MinuteOfTheYear field defines a total number of minutes that have passed in a current year, and can be used to indicate the timestamp. A value range is 0 to 527040, in units of 1 minute.

A data type of an id field is string. The id field is used to indicate the vehicle ID.

A data type of an rsuId field is the string. The rsuId field is used to indicate the RSU ID.

A data type of a Latitude:signed field is int. The Latitude:signed field is used to define a latitude value. North latitude is positive. South latitude is negative. The field is in units of (1e-7)°. A value range may be (-900000000..900000001). The field may be used to describe the location information of the terminal device.

A data type of a Longitude field is signed int. The Longitude field is used to define a longitude value. East longitude is positive. West longitude is negative. The field is in units of (1e-7)°. A value range may be (-1799999999..1800000001). The field may be used to describe the location information of the terminal device.

A data type of a Speed: unsigned field is short. The Speed: unsigned field is used to define a vehicle speed. A value range is 0 to 8191, in units of 0.02 m/s. A value 8191 indicates an invalid value.

A data type of a Heading field is unsigned short. The Heading field defines the heading angle of the vehicle, and is calculated based on a clockwise angle between a head direction and due north direction. A value range is 0 to 28800, in units of 0.0125°. A value 28800 indicates an unknown or invalid value.

A data type of a BasicVehicleClass field is unsigned char. The BasicVehicleClass field defines a basic vehicle type. A value range is 0 to 255.

A data type of a plateNum field is the string.

A data type of an imei field is the string.

A data type of a TollStationInformationList field is IA5String (SIZE(40)). The TollStationInformationList field is used to describe the toll station information list. Each ID occupies eight bytes. A maximum of five passing stations can be recorded.

In a possible implementation, the RSU may decrypt the first field in the second message by using the private key of the RSU, to obtain the symmetric key, and decrypt the second field by using the symmetric key, to obtain the charging information of the vehicle associated with the terminal device.

Optionally, the method shown in FIG. 5 may further include the following step: The RSU sends a fourth message to the terminal device. The fourth message may be considered as a response message (or an acknowledgment message) of the second message sent by the terminal device, and may be further used to indicate a processing result of the first charging service requested by the terminal device.

During specific implementation, after receiving the second message, the RSU acknowledges and responds to the request of the terminal device, and sends the fourth message to the terminal device. For example, the fourth message includes one or more of the following information: a message number, an RSU ID, a terminal identifier, a timestamp, an IMEI of the terminal device, a charged amount, and station description.

It should be noted that the terminal device may determine, based on the IMEI in the fourth message, whether the fourth message is a response of the RSU to the request of the terminal device. For example, after receiving the fourth message, if the terminal device determines that the IMEI in the fourth message is the same as the IMEI of the terminal device, the terminal device determines that the message is the response of the RSU to the second message sent by the terminal device. On the contrary, if the IMEI in the fourth message is different from the IMEI of the terminal device, the terminal device determines that the message is not the response of the RSU to the second message sent by the terminal device.

In a possible implementation, the RSU may send the fourth message to the terminal device for M times. The message number in the fourth message is used to indicate a number of the currently sent fourth message. The timestamp in the fourth message is used to indicate a time at which the RSU sends the fourth message.

In a possible implementation, after receiving the second message sent by the terminal device, the RSU immediately sends the fourth message to the terminal device. In other words, the RSU sends the fourth message before the third message, or sends the fourth message after the third message. This is not limited in this embodiment of this application.

In a possible implementation, if the terminal device does not receive the fourth message sent by the RSU, the terminal device sends the second message to the RSU again. Alternatively, the terminal device determines whether a distance between the terminal device and the RSU is less than a preset threshold. When determining that the distance between the terminal device and the RSU is less than the preset threshold, the terminal device sends the second message to the RSU.

In a possible implementation, a range of an SRC ID of the first message broadcast by the RSU is an SRC range 1. A range of an SRC ID of the second message sent by the terminal device is an SRC range 2. A value of the SRC range 1 is orthogonal to a value of the SRC range 2. The RSU determines a source layer-2 identifier of the first message in the SRC range 1. A destination-2 identifier (DST ID) of the first message is determined according to a 3GPP standard. The terminal device determines a source layer-2 identifier of the second message in the SRC range 2. A destination-2 identifier (DST ID) of the second message is the source layer-2 identifier of the first message. A source layer-2 identifier of the fourth message is the source layer-2 identifier of the first message. A DST ID of the fourth message is determined according to the 3GPP standard.

An embodiment of this application provides an automatic toll collection procedure, to implement an automatic charging service based on an RSU in an existing network architecture, without spending a large quantity of human and material resources in widely constructing ETC lanes. This reduces implementation costs of automatic charging. Specifically, the RSU may broadcast, through the PC5 interface, the charging service identifier supported by the RSU. Each terminal device within a communication radius of the RSU may send the second message to the RSU based on a service requirement of the terminal device, so that a service of the terminal device is processed by the charging server. Charging services requested by a plurality of terminal devices are processed at the same time, and a plurality of vehicles can be charged at the same time. This greatly improves efficiency of an automatic toll collection service.

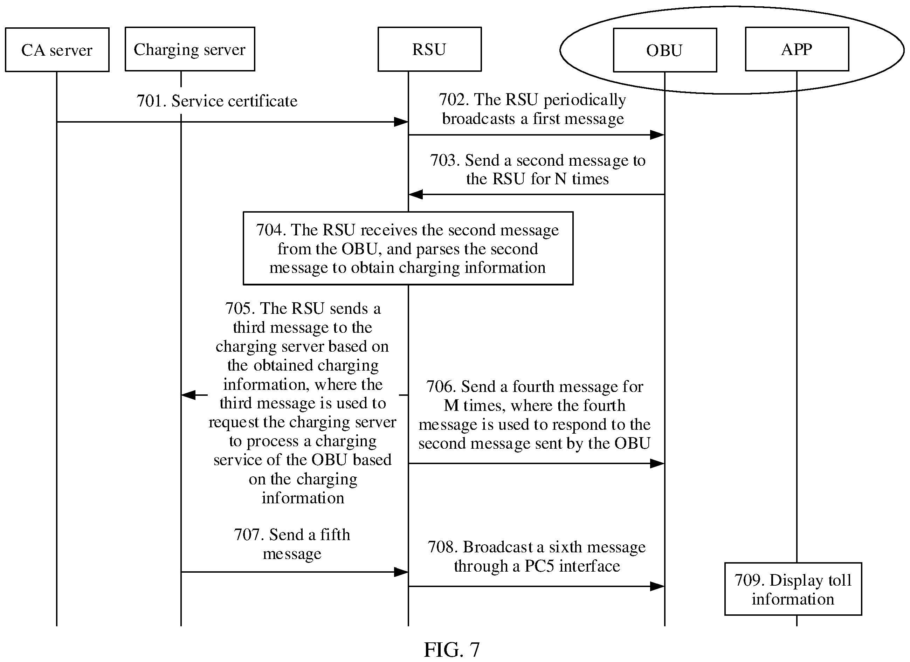

The following describes in detail the charging method provided in this embodiment of this application by using a specific example. As shown in FIG. 7, the method includes the following steps.

701. A CA server sends a service certificate to an RSU.

It should be noted that the service certificate includes a public key and a private key of the RSU, and is used to indicate validity of the RSU. In a possible implementation, an OBU may preset the service certificate of the RSU.

702. The RSU periodically broadcasts a first message.

Specifically, for information included in the first message, refer to the foregoing specific description of the method shown in FIG. 5. Details are not described herein again. The first message at least includes the charging service identifier, so that after receiving the first message, the terminal device initiates a second message based on a service requirement of the terminal device in response to the charging service identifier. Therefore, a charging service of the terminal device is processed.

703. The OBU sends the second message to the RSU for N times.

Specifically, for information included in the second message, refer to the foregoing specific description of the method shown in FIG. 5. Details are not described herein again. The second message at least includes charging information of a charging service of a vehicle associated with the OBU, to process, based on the charging information in the second message, the charging service of the vehicle associated with the OBU. For example, the second message may include location information of the OBU (or the vehicle associated with the OBU), license plate information of the vehicle associated with the OBU, and the like.

704. The RSU receives the second message from the OBU, and parses the second message to obtain the charging information.

705. The RSU sends a third message to a charging server based on the obtained charging information. The third message is used to request the charging server to process the charging service of the OBU based on the charging information.

Specifically, for information included in the third message, refer to the foregoing specific description of the method shown in FIG. 5. Details are not described herein again.

706. The RSU sends a fourth message to the OBU for M times. The fourth message is used to respond to the second message sent by the OBU.

Specifically, the fourth message is an acknowledgment response of the RSU to the second message sent by the OBU. For information included in the fourth message, refer to the foregoing specific description of the method shown in FIG. 5. Details are not described herein again.

707. The charging server sends a fifth message to the RSU.

Specifically, the fifth message is a charging completion message, and may include: a license plate number (license plate information), a charged amount, a charging time, a charging party, a charging mileage, a number of a start toll station for charging, a number of an end toll station for charging, and vehicle acknowledgment information.

708. After receiving the fifth message sent by the charging server, the RSU broadcasts a sixth message through a PC5 interface.

It should be noted that the sixth message includes the information about the fifth message. The sixth message may be an RSI message. In a possible implementation, the information about the first message may be reused, and only the following is added to station description in the first message: the charged amount, the charging time, the charging party, the charging mileage, the number of the start toll station for charging, the number of the end toll station for charging, and the like, to generate the sixth message.

709. An APP installed on the OBU can further display charging information.

For example, information such as the charged amount, charging time, and numbers of the toll stations for charging is displayed by using a display device of the OBU.

It should be noted that, after receiving the second message, the RSU immediately sends the fourth message to the OBU, to respond to the OBU. Alternatively, after the charging server sends the fifth message to the RSU, the RSU sends a seventh message. The first message includes the information about the sixth message and the information about the fourth message, and indicates completion of the charging and an acknowledgment response to the second message.

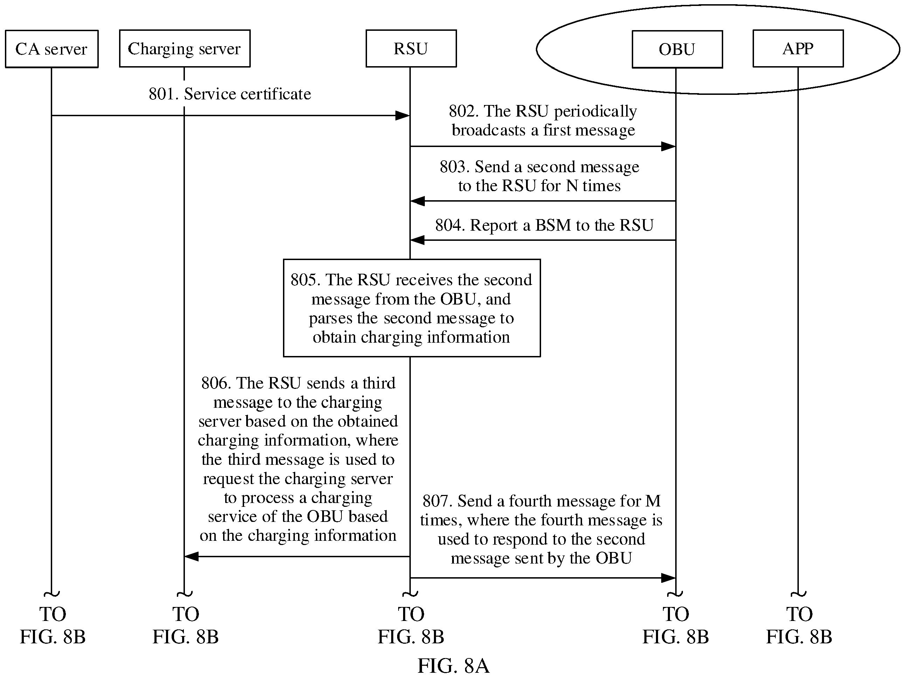

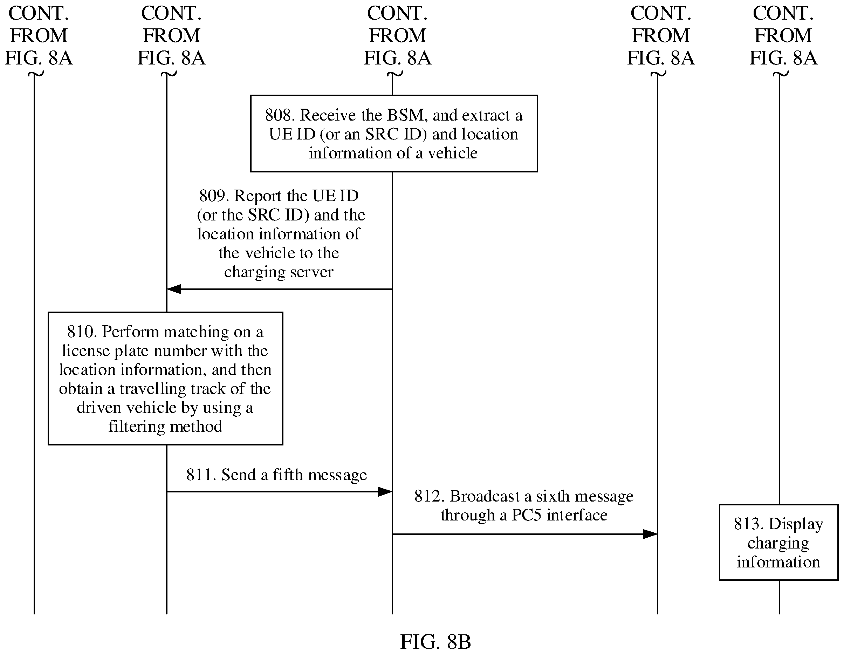

An embodiment of this application further provides a charging method. As shown in FIG. 8A and FIG. 8B, the method includes the following steps.

801. A CA server sends a service certificate to an RSU.

It should be noted that step 801 is an optional step. In addition, the service certificate includes a public key and a private key of the RSU, and is used to indicate validity of the RSU.

802. The RSU periodically broadcasts a first message.

Specifically, for information included in the first message, refer to the foregoing specific description of the method shown in FIG. 5. Details are not described herein again. The first message at least includes the charging service identifier, so that after receiving the first message, the terminal device initiates a second message based on a service requirement of the terminal device in response to the charging service identifier. Therefore, a charging service of the terminal device is processed.

803. The OBU sends the second message to the RSU for N times.

Specifically, for information included in the second message, refer to the foregoing specific description of the method shown in FIG. 5. Details are not described herein again. The second message at least includes charging information of a charging service of a vehicle associated with the OBU, to process, based on the charging information in the second message, the charging service of the vehicle associated with the OBU. For example, the second message may include license plate information of the vehicle associated with the OBU and a UE ID (temporary identifier) of the OBU.

It should be noted that, in the method shown in FIG. 8A and FIG. 8B, the second message does not include location information of the OBU (or the vehicle associated with the OBU).

804. The OBU reports a BSM to the RSU.

During specific implementation, when the UE ID of the OBU, an SRC ID of the OBU, or an ID of the vehicle associated with the OBU changes, the OBU is triggered to periodically and continuously report the BSM for P times. The BSM includes vehicle information. The vehicle information may be location information or the ID of the vehicle. The BSM may further include the UE ID of the OBU.

During specific implementation, the OBU periodically sends the BSM according to a clock. For example, the OBU sends the BSM every 100 ms. In addition, each time the OBU sends the BSM, the OBU updates the UE ID in the BSM. Alternatively, each time the OBU sends the BSM, the OBU updates an SRC ID corresponding to the BSM.

805. The RSU receives the second message from the OBU, and parses the second message to obtain the charging information.

806. The RSU sends a third message to a charging server based on the obtained charging information. The third message is used to request the charging server to process the charging service of the OBU based on the charging information.

Specifically, for information included in the third message, refer to the foregoing specific description of the method shown in FIG. 5. Details are not described herein again. It should be noted that the information in the third message sent by the RSU is related to the information in the second message reported by the OBU. For example, the third message may include the license plate information of the vehicle associated with the OBU and the UE ID (temporary identity) of the OBU. The second message reported by the terminal device does not include the location information of the vehicle. Therefore, the third message in step 806 does not include the location information of the vehicle either.

807. The RSU sends a fourth message to the OBU for M times. The fourth message is used to respond to the second message sent by the OBU.

Specifically, for information included in the fourth message, refer to the foregoing specific description of the method shown in FIG. 5. Details are not described herein again.

808. The RSU receives the BSM, and extracts the UE ID (or the SRC ID) and the location information of the vehicle.

809. The RSU reports the UE ID (or the SRC ID) and the location information of the vehicle to the charging server.

810. The charging server performs matching on a license plate number with the location information, and then determines a traveling track of the driven vehicle by using a filtering method.

Step 811 to step 813 are the same as step 707 to step 709. For specific implementation, refer to the foregoing detailed description of the method shown in FIG. 7. Details are not described herein again.

It should be noted that all information in the first message is sent in an unencrypted manner. The OBU receives the first message from the RSU. After receiving the first message, the OBU may generate a symmetric key. The second message may include the symmetric key generated by the OBU. In addition, the OBU preset the service certificate of the RSU. The OBU may obtain the public key of the RSU from the service certificate. The OBU may further encrypt the symmetric key in the second message by using the public key of the RSU, and encrypt the charging information in the second message by using the symmetric key.

In addition, after receiving the second message, the RSU immediately sends the fourth message to the OBU, to respond to the OBU. Alternatively, after the charging server sends the fifth message to the RSU, the RSU sends a seventh message. The first message includes the information about the sixth message and the information about the fourth message, and indicates completion of the charging and an acknowledgment response to the second message.

For example, the terminal identifier, the terminal information, and the like in the charging information all need to be encrypted by using the symmetric key. The terminal identifier may be license plate information, or the like. The terminal information may be a vehicle type, a traveling direction, a communication IMEI, the charging service identifier, or the like.

In a possible implementation, the RSU decrypts the second message by using the private key of the RSU, to obtain the symmetric key, and may further encrypt the fourth message by using the symmetric key.

In a possible implementation, after triggering a unicast service of the OBU (for example, sends the second message) by using the first message, the RSU may further determine, based on an application layer identifier in the second message, whether the second message is a unicast message. If the second message is identified as the unicast message, processing continues. Alternatively, if the second message is identified as a broadcast message, the second message is discarded.

After the OBU triggers the unicast service by using the second message, the RSU responds to the OBU in a unicast manner. Subsequently, after receiving a message, the OBU may determine, based on an application layer identifier of the message, whether the message is a unicast message. If the message is identified as the unicast message, the message can be considered as a response message sent by the RSU, and subsequent processing related to the charging service is performed. If the message is identified as a broadcast message, other processing is performed. For example, the message may be a message broadcast by another OBU, and includes road information, vehicle traveling information, and the like. The terminal device may plan a route, control a vehicle speed, and the like based on the road information, the vehicle traveling information, and the like in the message.

Optionally, after receiving the second message sent by the OBU, the RSU determines whether a DST of the second message belongs to an SRC generated by the RSU. If the DST of the second message does not belong to the SRC generated by the RSU, the second message is discarded.

Optionally, the OBU receives a message broadcast by the RSU, processes only a first message in an SRC range 1, and directly discards any other message.

Optionally, the second message sent by the OBU may be received by another OBU. The OBU may also receive a PC5 interface message sent by another OBU or RSU. The OBU may determine, based on an SRC ID of the received message, whether the message is the message broadcast by the RSU. For example, if the SRC ID of the message belongs to the SRC range 1, the message is determined as the message broadcast by the RSU.

Optionally, the OBU receives a unicast response acknowledgment message (for example, the fourth message) of the RSU, and determines whether a DST of the fourth message belongs to an SRC range 2 generated by the OBU. If the DST of the fourth message does not belong to the SRC range 2 generated by the OBU, the fourth message is discarded.

It should be noted that, to prevent different OBUs from generating a same SRC, the OBU further determines, at an application layer, whether an IMEI in the fourth message belongs to the OBU. If the IMEI in the fourth message does not belong to the OBU, the fourth message is discarded.

In the method provided in this embodiment of this application, the RSU and the OBU may effectively extract a message required by the RSU and the OBU through message filtering. This reduces a message processing amount.

In a possible implementation, each time the OBU receives the first message of the RSU, but does not receive the fourth message sent by the RSU, the OBU may immediately respond to the first message, and send the second message to the RSU. The second message is sent for a maximum of N times, where N≥1.

In a possible implementation, each time the RSU receives the second message sent by the OBU once, the RSU continuously sends the fourth message to the OBU for M times, where M≥1.

In addition, the RSU performs sliding window processing on second messages that are correctly received from a same OBU. Details are as follows: If the RSU correctly receives the second message once, the RSU starts "continuously sending the fourth message for M times". During a sending process, if the second message sent by the OBU is received again, the fourth message may not be sent anymore. Alternatively, when the second message sent by the OBU is received again during the sending process, "sending the fourth message continuously for M times" is restarted. In other words, the fourth message is sent again for M times.

It should be noted that when a same RSU performs one-to-one unicast communication with a plurality of OBUs, a plurality of fourth messages are generated. The fourth message may be sent based on a sequence of reservation time points in MAC layer resource allocation of the fourth message. A threshold requestDelayThr of maximum waiting duration is set for one fourth message. When waiting duration of the fourth message is greater than the threshold requestDelayThr, the fourth message is immediately sent.

A sending periodicity, a priority PPPP, an end-to-end delay, and the like are set for each of the first message, the second message, the third message, and the fourth message in this embodiment of this application, to ensure effective communication between the RSU, the OBU, and the charging server.

Sending resources of the first message, the second message, the third message, and the fourth message in this embodiment of this application reuse a V2X/V2V resource pool.

In a possible implementation, the vehicle travels near an entrance of a toll station, but does not travel into a toll road section. When the vehicle is near the entrance of the toll station, after receiving the first message broadcast by the RSU, the OBU on the vehicle may alternatively send the second message to the RSU to report the location information, the license plate information, and the like of the vehicle. To avoid false charging caused by this case, a camera at the entrance of the toll station may take a photo or a video stream for the vehicle, and may further parse the photo or the video stream for the vehicle to obtain license plate information, a vehicle model, and the like. The camera may send the obtained license plate information, vehicle model, and the like to the RSU. The RSU may further perform matching on the license plate information detected by the camera with the license plate information in the second message sent by the OBU. When the license plate information in the second message matches the license plate information detected by the camera, the third message is sent to the charging server based on the charging information in the second message, to request the charging server to process the vehicle charging service.

Alternatively, the camera sends the obtained license plate information, vehicle model, and the like to a near-end server (a server located on an edge of the RSU) of the RSU. The RSU sends the information in the second message to the near-end server. The near-end server may further perform matching on the license plate information reported by the camera with the license plate information reported by the RSU. When the two match each other, a computing server sends a message to the charging server, to request the charging server to process the charging service of the vehicle.

Alternatively, the camera sends the obtained license plate information, vehicle model, and the like to the charging server. The RSU sends the third message to the charging server based on the information in the second message. The charging server may further perform matching on the license plate information reported by the camera with that reported by the RSU. When the two match, the charging server processes the charging service of the vehicle.

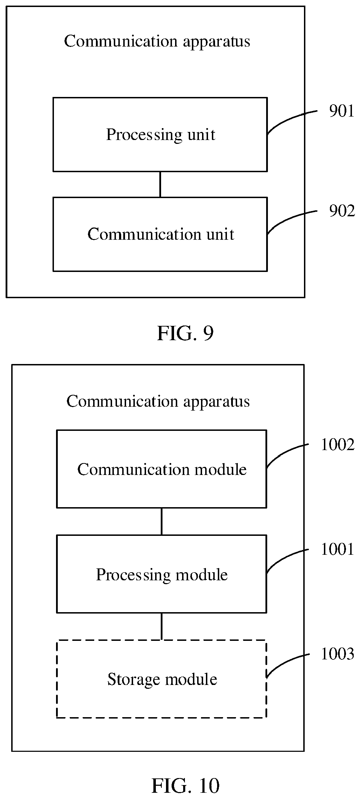

In a case that functional modules are obtained through division based on corresponding functions, FIG. 9 is a possible schematic diagram of a structure of the communication apparatus in the foregoing embodiments. The communication apparatus shown in FIG. 9 may be the terminal device in embodiments of this application, may be a component that implements the foregoing methods in the terminal device, or may be a chip used in the terminal device. The chip may be a system-on-a-chip (System-On-a-Chip, SoC), a baseband chip having a communication function, or the like. As shown in FIG. 9, the communication apparatus includes a processing unit 901 and a communication unit 902. The processing unit may be one or more processors, and the communication unit may be a transceiver.

The processing unit 901 is configured to support a terminal device in generating a second message, and/or is configured to perform another process of the technology described in this specification.

The communication unit 902 is configured to support communication between the terminal device and another communication apparatus, for example, support the terminal device in performing step 501 or step 502, and/or is configured to perform another process of the technology described in this specification.

It should be noted that all related content of the steps in the foregoing method embodiments may be cited in function descriptions of corresponding functional modules. Details are not described herein again.

For example, when an integrated unit is used, a schematic diagram of a structure of a communication apparatus according to an embodiment of this application is shown in FIG. 10. In FIG. 10, the communication apparatus includes a processing module 1001 and a communication module 1002. The processing module 1001 is configured to control and manage actions of the communication apparatus, for example, perform the step performed by the processing unit 901, and/or another process of the technology described in this specification. The communication module 1002 is configured to perform the step performed by the communication unit 902, and support interaction between the communication apparatus and another device, for example, interaction with another device apparatus. Optionally, as shown in FIG. 10, the communication apparatus may alternatively include a storage module 1003. The storage module 1003 is configured to store program code and data of the communication apparatus.

When the processing module 1001 is a processor, the communication module 1002 is a transceiver, and the storage module 1003 is a memory, the communication apparatus is the communication apparatus shown in FIG. 4.

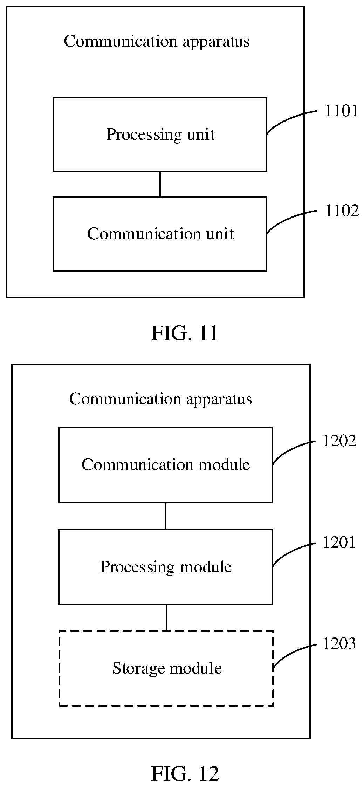

In a case that functional modules are obtained through division based on corresponding functions, FIG. 11 is a possible schematic diagram of a structure of the communication apparatus in the foregoing embodiments. The communication apparatus shown in FIG. 11 may be the roadside unit RSU described in the embodiments of this application, or may be a component that is in the RSU and that implements the foregoing methods, or may be a chip used in the RSU. The chip may be a system-on-a-chip (System-On-a-Chip, SoC), a baseband chip having a communication function, or the like. As shown in FIG. 11, the communication apparatus includes a processing unit 1101 and a communication unit 1102. The processing unit 1101 may be one or more processors, and the communication unit 1102 may be a transceiver.

The processing unit 1101 is configured to support the RSU in performing internal processing, for example, generating a third message, and/or is configured to perform another process of the technology described in this specification.

The communication unit 1102 is configured to support communication between the RSU and another communication apparatus, for example, support the RSU in performing step 501 to step 503, and/or is configured to perform another process of the technology described in this specification.

It should be noted that all related content of the steps in the foregoing method embodiments may be cited in function descriptions of corresponding functional modules. Details are not described herein again.

For example, when an integrated unit is used, a schematic diagram of a structure of a communication apparatus according to an embodiment of this application is shown in FIG. 12. In FIG. 12, the communication apparatus includes a processing module 1201 and a communication module 1202. The processing module 1201 is configured to control and manage actions of the communication apparatus, for example, perform the step performed by the processing unit 1101, and/or another process of the technology described in this specification. The communication module 1202 is configured to perform the step performed by the communication unit 1102, and support interaction between the communication apparatus and another device, for example, interaction with another first network device apparatus. Optionally, as shown in FIG. 12, the communication apparatus may alternatively include a storage module 1203. The storage module 1203 is configured to store program code and data of the communication apparatus.

When the processing module 1201 is a processor, the communication module 1202 is a transceiver, and the storage module 1203 is a memory, the communication apparatus is the communication apparatus shown in FIG. 4.

An embodiment of this application provides a computer-readable storage medium. The computer-readable storage medium stores instructions. The instructions are used to perform the method shown in FIG. 5, FIG. 7, or FIG. 8A and FIG. 8B.

An embodiment of this application provides a computer program product including instructions. When the computer program product is run on a communication apparatus, the communication apparatus is enabled to perform the method shown in FIG. 5, FIG. 7, or FIG. 8A and FIG. 8B.

An embodiment of this application provides a wireless communication apparatus, including: The wireless communication apparatus stores instructions. When the wireless communication apparatus is run on the communication apparatuses shown in FIG. 4, and FIG. 9 to FIG. 12, the communication apparatus is enabled to perform the method shown in FIG. 5, FIG. 7, or FIG. 8A and FIG. 8B. The wireless communication apparatus may be a chip.

An embodiment of this application further provides a communication system, including a terminal device and an RSU. For example, the terminal device may be the communication apparatuses shown in FIG. 4, and FIG. 9 to FIG. 12. The RSU may be the communication apparatuses shown in FIG. 4, FIG. 11, and FIG. 12.

Based on the descriptions of the foregoing implementations, a person skilled in the art can clearly understand that, for ease and brevity of description, division into the foregoing functional modules is merely used as an example for illustration. In actual application, the foregoing functions can be allocated to different functional modules and implemented as required. In other words, an inner structure of a database access apparatus is divided into different functional modules to implement all or some of the functions described above.

The processor in embodiments of this application may include but is not limited to at least one of the following computing devices that run software: a central processing unit (central processing unit, CPU), a microprocessor, a digital signal processor (DSP), a microcontroller unit (microcontroller unit, MCU), an artificial intelligence processor, or the like. Each computing device may include one or more cores configured to perform an operation or processing by executing software instructions. The processor may be an independent semiconductor chip, or may be integrated with another circuit to form a semiconductor chip. For example, a SoC (system-on-a-chip) may include the processor and another circuit (for example, an encoding/decoding circuit, a hardware acceleration circuit, or various buses and interface circuits). Alternatively, the processor may be integrated into an ASIC as a built-in processor of the ASIC, and the ASIC integrated with the processor may be independently packaged or may be packaged with another circuit. In addition to the core configured to perform an operation or processing by executing software instructions, the processor may further include a necessary hardware accelerator, for example, a field programmable gate array (field programmable gate array, FPGA), a PLD (programmable logic device), or a logic circuit that implements a dedicated logic operation.

The memory in embodiments of this application may include at least one of the following types: a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically erasable programmable-only memory, EEPROM). In some scenarios, the memory may alternatively be a compact disc read-only memory (compact disc read-only memory, CD-ROM) or another compact disc storage medium, an optical disc storage medium (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory is not limited thereto.

In this application, "at least one" means one or more. "A plurality of" means two or more than two. The term "And/or" describes an association relationship between associated objects and represents that three relationships may exist. For example, A and/or B may represent the following cases: Only A exists, both A and B exist, and only B exists, where A and B each may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference.

In the several embodiments provided in this application, it may be understood that the disclosed database access apparatus and method may be implemented in other manners. For example, the described database access apparatus embodiments are merely examples. For example, the division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, and may be located in one place or may be distributed on different places. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor to perform all or some of the steps of the methods described in embodiments of this application. The foregoing storage medium includes: any medium that can store program code, such as a USB flash drive, a removable hard disk, a ROM, a RAM, a magnetic disk, or an optical disc.

The foregoing description is merely a specific implementation of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A charging method, comprising:
broadcasting, by a roadside unit RSU, a first message through a PC5 interface, wherein the first message comprises at least one charging service identifier, and the at least one charging service identifier is used to indicate at least one charging service;
receiving, by the RSU, a second message sent by a terminal device, wherein the second message comprises charging information of a vehicle associated with the terminal device, the charging information is used for a first charging service of the vehicle, and the first charging service belongs to the at least one charging service; and
sending, by the RSU, a third message to a charging server based on the second message, wherein the third message is used to request the charging server to process the first charging service of the vehicle.

2. The method according to claim 1, wherein the second message comprises a first field and a second field, and the method further comprises:
decrypting the first field based on a private key of the RSU to obtain a symmetric key; and
decrypting the second field based on the symmetric key to obtain the charging information.

3. The method according to claim 1 or 2, wherein the charging information of the vehicle associated with the terminal device comprises license plate information of the vehicle and location information of the vehicle.

4. The method according to claim 3, wherein that the third message is used to request the charging server to process the first charging service of the vehicle comprises:
the third message comprises the license plate information of the vehicle and the location information of the vehicle.

5. The method according to claim 1 or 2, wherein the charging information of the vehicle associated with the terminal device comprises license plate information of the vehicle and a temporary identifier of the terminal device.

6. The method according to claim 5, wherein that the third message is used to request the charging server to process the first charging service of the vehicle comprises:
the third message comprises the license plate information of the vehicle and the temporary identifier of the terminal device.

7. The method according to claim 5 or 6, wherein the method further comprises:
receiving a basic safety message BSM from the terminal device, wherein the BSM comprises location information of the vehicle and the temporary identifier of the terminal device;
parsing the BSM to obtain the location information of the vehicle and the temporary identifier of the terminal device; and
sending the location information of the vehicle and the temporary identifier of the terminal device to the charging server.

8. The method according to claim 1 or 2, wherein the charging information of the vehicle associated with the terminal device comprises license plate information of the vehicle.

9. The method according to claim 8, wherein the method further comprises:
parsing the second message, and determining a source layer-2 identifier of the second message, wherein
the third message comprises the license plate information of the vehicle and the source layer-2 identifier of the second message.

10. The method according to claim 9, wherein the method further comprises:
receiving a basic safety message BSM from the terminal device, wherein the BSM comprises location information of the vehicle;
parsing the BSM to obtain the location information of the vehicle and a source layer-2 identifier of the BSM; and
sending the location information of the vehicle and the source layer-2 identifier of the BSM to the charging server, wherein the source layer-2 identifier of the second message is the same as the source layer-2 identifier of the BSM.

11. The method according to any one of claims 1 to 10, wherein the first message further comprises at least one of the following information:
a time at which the RSU sends the first message, an identifier of the RSU, location information of the RSU, a service communication radius of the RSU, station description, and a message type identifier; wherein
the station description is used to indicate a traveling direction for charging at a charging point associated with the RSU and/or a number of the charging point, and the message type identifier is used to describe a sending type of the first message.

12. The method according to any one of claims 1 to 11, wherein the charging information further comprises at least one of the following information:
a time at which the terminal device sends the second message, the identifier of the RSU, the symmetric key, a type of the vehicle, a heading angle of the vehicle, and an international mobile equipment identity IMEI of the terminal device.

13. The method according to any one of claims 1 to 12, wherein the method further comprises:
sending a fourth message to the terminal device in response to the second message, wherein the fourth message is used to indicate a processing result of the first charging service.

14. A communication apparatus, comprising:
a communication unit, configured to broadcast a first message through a PC5 interface, wherein the first message comprises at least one charging service identifier, and the at least one charging service identifier is used to indicate at least one charging service, wherein
the communication unit is further configured to receive a second message sent by a terminal device, wherein the second message comprises charging information of a vehicle associated with the terminal device, the charging information is used for a first charging service of the vehicle, and the first charging service belongs to the at least one charging service; and
a processing unit, configured to send a third message to a charging server based on the second message, wherein the third message is used to request the charging server to process the first charging service of the vehicle.

15. The communication apparatus according to claim 14, wherein the second message comprises a first field and a second field; and
the processing unit is further configured to decrypt the first field based on a private key of the communication apparatus to obtain a symmetric key, and decrypt the second field based on the symmetric key to obtain the charging information.

16. The communication apparatus according to claim 14 or 15, wherein the charging information of the vehicle associated with the terminal device comprises license plate information of the vehicle and location information of the vehicle.

17. The communication apparatus according to claim 16, wherein that the third message is used to request the charging server to process the first charging service of the vehicle comprises:
the third message comprises the license plate information of the vehicle and the location information of the vehicle.

18. The communication apparatus according to claim 14 or 15, wherein the charging information of the vehicle associated with the terminal device comprises license plate information of the vehicle and a temporary identifier of the terminal device.

19. The communication apparatus according to claim 18, wherein that the third message is used to request the charging server to process the first charging service of the vehicle comprises:
the third message comprises the license plate information of the vehicle and the temporary identifier of the terminal device.

20. The communication apparatus according to claim 18 or 19, wherein
the communication unit is further configured to receive a basic safety message BSM from the terminal device, wherein the BSM comprises location information of the vehicle and the temporary identifier of the terminal device;
the processing unit is further configured to parse the BSM to obtain the location information of the vehicle and the temporary identifier of the terminal device; and
the communication unit is further configured to send the location information of the vehicle and the temporary identifier of the terminal device to the charging server.

21. The communication apparatus according to claim 14 or 15, wherein the charging information of the vehicle associated with the terminal device comprises license plate information of the vehicle.

22. The communication apparatus according to claim 21, wherein the processing unit is further configured to parse the second message, and determine a source layer-2 identifier of the second message, wherein
the third message comprises the license plate information of the vehicle and the source layer-2 identifier of the second message.

23. The communication apparatus according to claim 22, wherein
the communication unit is further configured to receive a basic safety message BSM from the terminal device, wherein the BSM comprises location information of the vehicle;
the processing unit is further configured to parse the BSM to obtain the location information of the vehicle and a source layer-2 identifier of the BSM; and
the communication unit is further configured to send the location information of the vehicle and the source layer-2 identifier of the BSM to the charging server, wherein the source layer-2 identifier of the second message is the same as the source layer-2 identifier of the BSM.

24. The communication apparatus according to any one of claims 14 to 23, wherein the first message further comprises at least one of the following information:
a time at which the communication apparatus sends the first message, an identifier of the communication apparatus, location information of the communication apparatus, a service communication radius of the communication apparatus, station description, and a message type identifier, wherein
the station description is used to indicate a traveling direction for charging at a charging point associated with the communication apparatus and/or a number of the charging point, and the message type identifier is used to describe a sending type of the first message.

25. The communication apparatus according to any one of claims 14 to 24, wherein the charging information further comprises at least one of the following information:
a time at which the terminal device sends the second message, the identifier of the communication apparatus, the symmetric key, a type of the vehicle, a heading angle of the vehicle, and an international mobile equipment identity IMEI of the terminal device.

26. The communication apparatus according to any one of claims 14 to 25, wherein the communication unit is further configured to send a fourth message to the terminal device in response to the second message, wherein the fourth message is used to indicate a processing result of the first charging service.

27. A communication apparatus, comprising a processor, wherein the processor is coupled to a memory;
the memory, configured to store a computer program; and
the processor, configured to execute the computer program stored in the memory, so that the apparatus performs the method according to any one of claims 1 to 13.

28. A computer-readable storage medium, comprising a program or instructions, wherein when the program or the instructions are run by a processor, the method according to any one of claims 1 to 13 is performed.
